# EUROPÄISCHE PATENTSCHRIFT

(11) **EP 2 972 626 B1**
(45) Veröffentlichungstag und Bekanntmachung des Hinweises auf die Patenterteilung: **14.06.2017**
(21) Anmeldenummer: 14719191.0
(22) Anmeldetag: 13.03.2014
(51) Int. Cl.: G05D 1/02, B60W 50/10

(54) **VERFAHREN ZUR ALLOKATION DER KONTROLLE IN EINEM SYSTEM-OF-SYSTEMS**
METHOD OF CONTROL ALLOCATION IN A SYSTEM-OF-SYSTEMS
PROCEDE D'ALLOCATION DE CONTROLE DANS UN SYSTEME DE SYSTEMES

(30) Priorität: 14.03.2013 AT 2012013
(43) Veröffentlichungstag der Anmeldung: 20.01.2016
(73) Patentinhaber: FTS Computertechnik GmbH, 1040 Wien (AT)
(72) Erfinder: KOPETZ, Hermann, 2500 Baden (AT)
(74) Vertreter: Patentanwaltskanzlei Matschnig & Forsthuber OG
(86) Internationale Anmeldenummer: PCT/AT2014/050063
(87) Internationale Veröffentlichungsnummer: WO 2014/138766

(56) Entgegenhaltungen:
- EP-A1- 2 314 489
- DE-A1- 10 144 797
- DE-A1-102005 050 310
- DE-A1-102010 009 133
- MARKUS HORWICK ET AL: "Strategy and architecture of a safety concept for fully automatic and autonomous driving assistance systems", INTELLIGENT VEHICLES SYMPOSIUM (IV), 2010 IEEE, IEEE, PISCATAWAY, NJ, USA, 21. Juni 2010 (2010-06-21), Seiten 955-960, XP031732276, ISBN: 978-1-4244-7866-8

## Beschreibung

Die Erfindung ein Verfahren zur Allokation der Kontrolle in einem System-of-Systems, insbesondere einem dynamischen System-of-Systems, welches aus einem physikalischen System PS, einem autonomen Steuerungssystem CS, einem Human Operator HO, einer Monitorkomponente MK und einer Aktuatorsteuerung AST besteht oder ein physikalisches System PS, ein autonomes Steuerungssystem CS, eine Human Operator HO, eine Monitorkomponente MK und eine Aktuatorsteuerung AST umfasst.

Weiters betrifft die Erfindung ein System-of-Systems, insbesondere dynamisches System-of-Systems bestehend aus einem physikalischen System PS, einem autonomen Steuerungssystem CS, einem Human Operator HO, einer Monitorkomponente MK und einer Aktuatorsteuerung AST bzw. umfassend ein physikalisches System PS, ein autonomes Steuerungssystem CS, eine Human Operator HO, eine Monitorkomponente MK und eine Aktuatorsteuerung AST.

Außerdem betrifft die Erfindung ein Fahrzeug, insbesondere ein Kraftfahrzeug mit zumindest einem solchen System-of-Systems.

Die vorliegende Erfindung liegt im Bereich der Steuerungstechnik autonomer Systeme. Sie beschreibt ein innovatives Verfahren, wie in einem *System-of-Systems* (SoS) die Kontrolle über einen technischen Prozess allokiert werden soll.

Die technischen Entwicklungen auf dem Gebiet der Mikroelektronik ermöglichen den kostengünstigen Bau von *autonomen technischen Systemen,* z.B. *autonome Fahrzeuge, autonome Roboter* und viele andere. Ein *autonomes System* ist dadurch gekennzeichnet, dass man ihm ein Ziel vorgibt, es aber dem System überlässt, welche Strategie ausgewählt und verfolgt wird, um dieses Ziel zu erreichen.

Ein autonomes technisches System besteht aus einer technischen Anlage, dem zu *steuernden physikalischen Objekt* (*Physical System-*PS), einem das physikalische Objekt *steuernden Computersystern* (*Cyber System-*CS) und einem intelligenten *Aktuatorensystem* (*AST*), das an der Grenze zwischen dem CS und PS angeordnet ist, um das Verhalten des PS zu beeinflussen. Das CS beobachtet mit seinem *Sensorsystem* das Verhalten des PS und seiner Umgebung und errechnet autonom geeignete *Stellwerte* für das *AST.* DE 101 44 797 A1 offenbart ein Verfahren zur Allokation der Kontrolle in einem System-of-Systems, welches aus einem physikalischen System PS (Fahrzeug), einem autonomen Steuerungssystem CS, einem Human Operator HO (Fahrer), einer Monitorkomponente MK und einer Aktuatorsteuerung AST besteht oder ein physikalisches System PS, ein autonomes Steuerungssystem CS, eine Human Operator HO, eine Monitorkomponente MK und eine Aktuatorsteuerung AST umfasst, wobei das CS mit einem ihm zugeordneten Sensorsystem eine Umgebung, z.B. eine Umgebung des physikalischen Systems, beobachtet, um Stellwerte für die AST und einen Kritikalitätsindex KI des Szenarios in einem Zyklus zu bestimmen, und wobei die MK den HO und/oder seine Handlungen, insbesondere seine gegenwärtigen Handlungen zyklisch beobachtet, um auf der Basis dieser Beobachtungen einen Engagement-Index EI des HO in einem Zyklus und wobei die Kontrolle über das PS an den HO zugewiesen wird. In vielen Anwendungsbereichen verlangt der Gesetzgeber, dass ein *Mensch* einen autonom ablaufenden Prozess überwachen und jederzeit in der Lage sein muss, in den Prozess einzugreifen. So erfordern z.B. die kürzlich erlassenen Gesetze in den US Bundesstaaten Kalifornien und Nevada [5], dass in Fahrzeugen mit autonomen Steuerungssystemen auf öffentlichen Straßen ein Mensch vor dem Lenkrad sitzen und *jederzeit* in der Lage sein muss, die Kontrolle über das Fahrzeug zu übernehmen.

Wenn neben dem CS ein Mensch Stellwerte für das AST vorgeben kann, dann sind in dieser technischen Anlage zwei weitgehend unabhängige Steuerungssysteme vorhanden: (1) ein *autonomes* CS mit Sensoren (Kamera, Laser, Radar, etc.) zur Beobachtung des PS und dessen Umgebung mit einer elektronischen Auswertelogik zur Bestimmung der Stellwerte das AST, und (2) ein *Mensch* (*Human Operator--HO*), der die Umgebung mit seinen Sinnen beobachtet, sich geeignete Stellwerte überlegt und diese Stellwerte dem AST vorgibt. In der englischen Fachliteratur hat sich für ein System, in dem mehrere *autonome Subsysteme* zusammenwirken, der Begriff *System-of-Systems (SoS)* eingebürgert [6, S.104].

In einem SoS können durch die Interaktionen der autonomen Subsysteme ein neues Verhalten oder neue Eigenschaften entstehen, die auf der Ebene der Subsysteme nicht vorhanden sind. Dieses neue Verhalten oder diese neuen Eigenschaften bezeichnet man als *emergent* [7]. Emergente Eigenschaften können *zufällig* oder *beabsichtigt* sein, sie können sich *positiv* oder *negativ* auf die Mission des SoS auswirken. Wenn in einem SoS zwei autonome Systeme unterschiedliche Strategien verfolgen, um ein vorgegebenes Ziel zu erreichen, so kann es zu *zufälligen negativen emergenten* Eigenschaften kommen.

Folgendes Beispiel aus dem Straßenverkehr soll das Konzept einer *zufälligen negativen emergenten* Eigenschaft des SoS *autonomes Fahrzeug* veranschaulichen. Der HO (Fahrer) eines PKWs entscheidet sich, auf einer zweispurigen Straße einen LKW zu überholen. Unmittelbar vor dem Ende des Überholvorgangs erscheint ein entgegenkommendes Fahrzeug (auf der gleichen Spur wie der überholende PKW). Das automatische Bremssystem des Fahrzeugs erkennt das näher kommende Fahrzeug und initiiert eine Notbremsung, um einen Unfall zu vermeiden. Durch diese Notbremsung kann es zu einem Unfall kommen, da der Überholvorgang vom HO nicht abgeschlossen werden kann.

Die Ursache dieses potentiellen Unfalls liegt in der *parallelen Kontrolle über das Fahrzeug* und den *unterschiedlichen Kontrollstrategien,* die im konkreten Fall von den beiden autonomen Steuerungssystemen, dem HO und dem CS, verfolgt werden. Der HO will das Fahrzeug weiter beschleunigen, um es rechtzeitig auf die rechte Spur zu bringen, während das CS das Fahrzeug bremsen will, um eine Kollision zu verhindern. Wir bezeichnen einen signifikanten Vorgang, der während einer begrenzten Zeit abläuft, als eine *Episode.* Der Überholvorgang ist ein Beispiel für eine Episode. Der ungewollte Kontrolltransfer vom HO zum CS während einer Episode ist der Grund für den potentiellen Unfall.

Es ist kaum möglich, *taxativ* alle Situationen zu erfassen, in denen durch die parallele Kontrolle der beiden autonomen Steuerungssysteme-des CS und des HO-über das PS *zufällige negative emergente* Eigenschaften entstehen könnten.

Es ist eine Aufgabe der Erfindung, dieses Problem zu lösen.

Diese Aufgabe wird mit einem eingangs genannten Verfahren dadurch gelöst, dass erfindungsgemäß das CS mit einem ihm zugeordneten Sensorsystem eine Umgebung, z.B. eine Umgebung des physikalischen Systems, und/oder das physikalische System zyklisch beobachtet und auf Basis dieser Beobachtung ein internes Modell der Umgebung und/oder des PS erstellt und eine Analyse des Modells vornimmt, um Stellwerte für die AST und einen *Kritikalitätsindex KI* des Szenarios in einem Zyklus, insbesondere im gegenwärtigen Zyklus zu bestimmen, und wobei die MK den HO und/oder seine Handlungen, insbesondere seine gegenwärtigen Handlungen zyklisch beobachtet, um auf der Basis dieser Beobachtungen einen *Engagement-Index EI* des HO in einem Zyklus, insbesondere im gegenwärtigen Zyklus zu bestimmen, wobei EI und KI normierte Werte zwischen 0 und 1 annehmen können, wobei KI = 0 die geringste Kritikalität und KI = 1 die höchste Kritikalität darstellt, und wobei EI = 0 bedeutet, dass der HO nicht engagiert ist, und EI = 1 bedeutet, dass der HO voll engagiert ist, und wobei die Kontrolle über das PS an den HO zugewiesen wird, wenn EI > KI.

Weiters wird diese Aufgabe mit einem eingangs erwähnten SoS dadurch gelöst, dass erfindungsgemäß zur Allokation der Kontrolle das CS mit einem ihm zugeordneten Sensorsystem eine Umgebung, z.B. eine Umgebung des physikalischen Systems, und/oder das physikalische System zyklisch beobachtet und auf Basis dieser Beobachtung ein internes Modell der Umgebung und/oder des PS erstellt und eine Analyse des Modells vornimmt, um Stellwerte für die AST und einen *Kritikalitätsindex KI* des Szenarios in einem Zyklus, insbesondere im gegenwärtigen Zyklus zu bestimmen, und wobei die MK den HO und/oder seine Handlungen, insbesondere seine gegenwärtigen Handlungen zyklisch beobachtet, um auf Basis dieser Beobachtungen einen *Engagement-Index EI* des HO in einem Zyklus, insbesondere im gegenwärtigen Zyklus zu bestimmen, und wobei die Kontrolle über das PS an den HO allokiert, wenn EI > Kl.

Erfindungsgemäß wird also vorgeschlagen, die Allokation der Kontrolle über das PS grundsätzlich zu regeln.

Bevorzugte Ausführungsformen der erfindungsgemäßen Vorrichtung und des erfindungsgemäßen Verfahrens, welche für sich alleine oder in beliebiger Kombination miteinander realisiert sein können, sind im Folgenden beschrieben:
➢ der HO gibt die Kontrolle an das CS ab, wenn EI ≤ EI_{grenz} und KI ≥ EI;
➢ der *Wert des Kritikalitätsindex KI* wird abgeleitet vom Zeitintervall zwischen *jetzt* und dem *LIA* (*last instant of action*); siehe dazu auch die Figurenbeschreibung;
➢ der *Engagement-Index EI* des HO wird abgeleitet von einem optischen *Aufmerksamkeitsindex OAI* des HO und einem *motorischen Aufmerksamkeitsindex MAI* des HO;
➢ der optische *Aufmerksamkeitsindex OAI* des HO wird von der Beobachtung einer Visierlinie des HO bestimmt;
➢ der *motorische Aufmerksamkeitsindex MAI* des HO wird von der Beobachtung der vom HO ausgegebenen Stellwerte bestimmt;
➢ der optische *Aufmerksamkeitsindex OAI* des HO und der *motorische Aufmerksamkeitsindex MAI* des HO werden über die Zeit *exponentiell geglättet.*

Es werden also folgende Regelungen für die Allokation der Kontrolle über das PS vorgeschlagen:
- Zu jedem Zeitpunkt darf nur ein System (das CS oder der HO) Kontrolle über das PS ausüben.
- Den gesetzlichen Vorgaben entsprechend kann der HO jederzeit die Kontrolle über das PS vom CS übernehmen.
- Ein Kontrolltransfer vom CS zum HO findet statt, wenn das *Engagement* des HO (gemessen durch den *Engagement-Index EI*) größer ist als die *Kritikalität* der augenblicklichen Situation (gemessen durch den Kritikalitätsindex *KI*).
- Um währen einer Episode eine Oszillation der Kontrolle zwischen dem HO und dem CS zu verhindern, findet ein Kontrolltransfer vom HO zum CS vorzugsweise erst statt, wenn EI kleiner ist als ein festgelegter Grenzwert EI_{grenz} und KI größer ist als EI.

Im Folgenden wird die Erfindung an Hand der Zeichnung näher erörtert, und insbesondere wird beschrieben, wie der KI und EI ermittelt werden können. In der recherchierten Patentliteratur [1-3] wurde kein Verfahren gefunden, dass die Allokation der Kontrolle in einem SoS zum Inhalt hat. In der Zeichnung zeigt die einzige

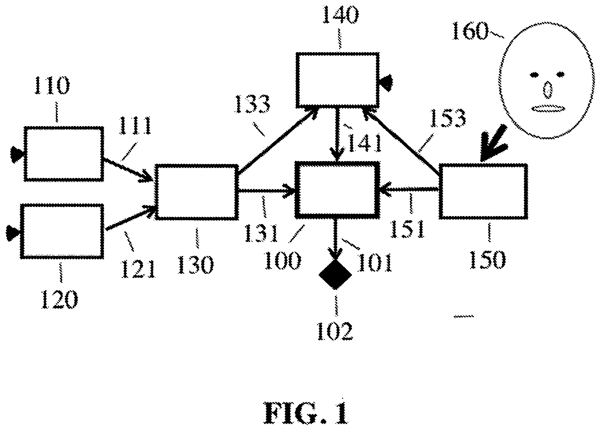

Fig. 1 die Struktur eines vorgeschlagenen Steuerungssystem.

In vielen technischen Anwendungsbereichen verlangt der Gesetzgeber, dass ein *Mensch* einen autonom ablaufenden Prozess überwachen und jederzeit in der Lage sein muss, in den Prozess einzugreifen. In einer solchen automatisierten technischen Anlage existieren zwei unabhängige Steuerungssysteme: auf der einen Seite das autonome technische Steuerungssystem mit seinen Sensoren und auf der anderen Seite der Mensch. Durch die parallele Kontrolle der Steuerungssysteme kann es zu unbeabsichtigten negativen emergenten Eigenschaften kommen. Die vorliegende Erfindung legt ein Verfahren offen, wie die Allokation der Kontrolle vorzunehmen ist, um diese negativen emergenten Eigenschaften zu verhindern. Das Verfahren wird am Beispiel der Steuerung eines autonomen Fahrzeugs genau erklärt.

Entsprechend Fig. 1 besteht das vorgeschlagene Steuerungssystem für eine autonome technische Anlage aus vier Blöcken. Auf der linken Seite der Fig. 1 ist das steuernde Computersystem CS dargestellt. Es beinhaltet Sensoren **110** und **120** und eine *Sensor Fusion Komponente* SFK **130.** In der Mitte ist eine, vorzugsweise intelligente, *Aktuatorsteuerung AST* **100** gezeigt. Die AST **100** gibt über eine Datenleitung **101** die Stellwerte an Aktuatoren **102** einer technischen Anlage vor. Auf der rechten Seite der Fig. 1 ist der *Human Operator* HO **160** mit einer Mensch-Maschine Interface Komponente *MMI* **150** dargestellt, und in der Figur über dem AST **100** ist eine *Monitorkomponente* MK **140** zu sehen.

Im Folgenden soll die Funktion dieses Steuerungssystems am Beispiel der Steuerung eines autonomen Fahrzeugs erklärt werden. Die Sensoren **110** und **120,** beispielsweise eine *Kamera* und ein *Lasersensor,* beobachten zyklisch die Umgebung des Fahrzeugs und senden die erfassten Daten über Datenleitungen **111** und **121** an die SFK **130.** Die Dauer eines typischen Zyklus beträgt beispielhaft 10 msec. Die SFK **130** erstellt auf der Basis der zyklisch erfassten Umgebungsdaten ein dreidimensionales Modell der Umgebung des Fahrzeugs, errechnet die Entfernung zu Hindernissen im Fahrweg, und falls sich die Hindernisse bewegen, deren Bewegungsrichtung und Geschwindigkeit. Nach einer Analyse dieses dreidimensionalen Modells werden von der SFK **130,** unter Berücksichtigung der Geschwindigkeit des eigenen Fahrzeugs, die Stellwerte für die AST **100** ermittelt und diese Stellwerte über eine Datenleitung **131** zyklisch an die AST **100** übergeben.

Im Rahmen der Analyse des Modells ermittelt die SFK **130** *kritische Orte* im dreidimensionalen Raum, die von besonderer Bedeutung für die zukünftige Bewegung des Fahrzeugs sind. Wenn sich z.B. ein Fußgänger Richtung Fahrbahn bewegt, ohne seine Geschwindigkeit zu reduzieren, so ist der voraussichtliche Ort des Betretens der Fahrbahn ein solcher *kritischer Ort.* Wir bezeichnen einen kritischen Ort einen *Point-of-Critical Action* (PCA). Die SFK ermittelt im dreidimensionalen Modell einen *Sichtvektor* zwischen den Augen des Fahrers und dem PCA und sendet die Parameter dieses Sichtvektors über Datenleitung **133** an die MK **140.**

Wenn der erkannte PCA im geplanten Fahrweg des Fahrzeugs liegt, so wird die SFK **130** eine Aktion (z.B. Bremsvorgang) einleiten, um das Fahrzeug vor dem Fußgänger anzuhalten. Wir bezeichnen den spätesten Zeitpunkt, zu dem eine Aktion (z.B. Notbremsung) eingeleitet werden kann, um noch vor dem Hindernis anzuhalten, den *Last Instant of Action* (LIA).

Die folgende Tab. 1 gibt den Bremsweg und die Bremszeit eines PKWs unter normalen Straßenbedingungen an. Unter der *Anfangszeit* (*onset time*) wird jenes Zeitintervall verstanden, das vergeht zwischen dem *Auftreten eines Hindernisses* und dem *Beginn des Bremsens.* Während der *Anfangszeit* müssen folgende Aktionen stattfinden:
- Beobachtung des Szenarios
- Analyse des Szenarios
- Festlegung der notwendigen Aktion
- Beginn der Aktion.

Aus der Literatur [8] ist ein typischer Wert für die *Anfangszeit* des HO 160 *eine Sekunde,* während für das CS ein Wert von *100 msec* angenommen wird. Die *Anfangsentfernung* in Tab. 1 gibt die Länge des Weges an, die das Fahrzeug während der Anfangszeit zurücklegt. Der Bremsweg BW ist die Summe der Anfangsentfernung und der Entfernung, die notwendig ist, um das Fahrzeug nach Beginn der Bremsung anzuhalten. In der Tabelle bedeutet: AE = Anfangsentfernung; BW = Bremsweg; auto = automatisch. Es wird von folgenden Annahmen ausgegangen: Anfangszeit = manuell 1 sec, automatisch = 0.1 sec.

**Tab. 1: Bremsweg und Bremszeit [9]**

| Speed km/h | AE in m manuell | AE in m auto | BW in m manuell1 | BW in m auto | Bremszeit in s auto |
|---|---|---|---|---|---|
| 30 | 8.3 | .83 | 12.1 | 4.7 | 1.0 |
| 50 | 14 | 1.4 | 24.6 | 12 | 1.6 |
| 80 | 22.2 | 2.2 | 49.6 | 29.6 | 2.6 |
| 100 | 27.8 | 2.8 | 70.7 | 45.6 | 3.2 |
| 130 | 36.1 | 3.6 | 108.6 | 76 | 4.1 |
| 160 | 44.4 | 4.4 | 154 | 114 | 5 |

Die *verbleibende Reaktionszeit VRZ* ist das Zeitintervall zwischen der gegenwärtigen, aktuellen Zeit/Zeitpunkt (*jetzt*) und dem *LIA.* Die VRZ ist ein Maß für die Kritikalität des gegenwärtigen Scenarios. Die SFK bestimmt aus der VRZ unter Berücksichtigung der Geschwindigkeit des Fahrzeugs und der gegenwärtigen Fahrbedingungen einen *Kritikalitätsindex KI* des gegenwärtigen Szenarios. Der normierte KI liegt zwischen 0 und 1, wobei 0 die geringste Kritikalität und 1 die höchste Kritikalität darstellt.

Unter Bezugnahme auf Tab. 1 kann der KI beispielsweise wie folgt festgelegt werden:
➢ Wenn VRZ > 4* Bremszeit, dann ist KI=0,
➢ Wenn VRZ ≤ Bremszeit, dann ist KI=1, andernfalls
➢ KI = (1- (VRZ - Bremszeit)/(3*Bremszeit))

Der KI wird von der SFK **130** zyklisch über die Datenleitung **131** an die AST **100** übergeben.

Der HO **160** in Fig.1 beobachtet mit seinen Augen die Umgebung des Fahrzeugs, analysiert das Szenario und gibt taktil seine Stellwerte an die MMI **150**. In einem Kraftfahrzeug besteht das MMI im Wesentlichen aus der Bremse, dem Lenkrad und dem Gaspedal. In [4] wird beispielsweise vorgeschlagen, einen Sensor in das Lenkrad einzubauen, der die Kraft misst, mit der der HO das Lenkrad hält. Die MMI übernimmt diese Stellwerte zyklisch und bildet einen Vektor (*current control vector* CCV), der die vom HO übernommen Stellwerte im gegenwärtigen und den kürzlich vergangenen Zyklen beinhaltet (bei den kürzlich vergangenen Zyklen handelt es sich beispielsweise um die letzten 10 Zyklen). Der CCV wird zyklisch an die AST **100** und an die MK **140** übergeben.

Die MK **140** erfasst zyklisch mittels einer Kamera die Visierlinie der Augen des HO **160** (Fahrer), um festzustellen, ob der HO 160 den Fahrweg und den von der SFK **130** empfangenen PCA beobachtet, und ermittelt einen *optischen Aufmerksamkeitsindex OAI* im gegenwärtigen Zyklus. Der OAI hat den Wert 1, wenn die optische Aufmerksamkeit des HO **160** im gegenwärtigen Zyklus gegeben ist. Wenn der HO **160** nicht auf den Fahrweg schaut oder in einen Sekundenschlaf gefallen ist, so hat OAI den Wert 0, ansonsten einen Wert zwischen 1 und 0. In der Folge speichert die MK **140** den OAI in einem Vektor, um eine Zeitreihe der OAIs in den unmittelbaren vergangenen Zyklen, etwa innerhalb einer Sekunde (der *Anfangszeit* der Tab. 1) zu bilden, und errechnet aus dieser Zeitreihe, vorzugsweise mittels *exponential smoothing,* einen, vorzugsweise *geglätteten, optischen Aufmerksamkeitsindex OAI_{gegl}*, wobei die OAI Werte aus der jüngsten Vergangenheit (z.B. der letzten vergangenen 10 Zyklen) stärker gewichtet sind als die älteren Werte.

In gleicher Weise errechnet die MK **140** in jedem Zyklus aus dem von der MMI **150** empfangenen CCV, vorzugsweise mittels *exponential smoothing,* einen, vorzugsweise geglätteten, *motorischen Aufmerksamkeitsindex MAI_{gegl}.*

Der *Engagement-Index EI* gibt an, in welchem Ausmaß der HO zum gegenwärtigen Zeitpunkt an der Steuerung des Fahrzeugs engagiert ist. EI ist eine Funktion von *OAI_{gegl} und MAI_{gegl}.* Diese Funktion wird in den verschiedenen Verkehrssituationen (Stadtverkehr, Fahren auf der Autobahn) unterschiedlich sein. Eine mögliche Ausprägung dieser Funktion ist in Tab. 2 tabellarisch dargestellt.

**Tab. 2: Engagement-Index EI als Funktion von OAI_{gegl} und MAI_{gegl}**

| ***MAI_{gegl}*** | 0.0 | 0.2 | 0.4 | 0.6 | 0.8 | 1.0 |
|---|---|---|---|---|---|---|
| ***OAI_{gegl}*** | | | | | | |
| 0.0 | 0.0 | 0.1 | 0.2 | 0.2 | 0.3 | 0.3 |
| 0.2 | 0.0 | 0.1 | 0.2 | 0.3 | 0.4 | 0.4 |
| 0.4 | 0.0 | 0.2 | 0.3 | 0.4 | 0.5 | 0.5 |
| 0.6 | 0.0 | 0.2 | 0.3 | 0.5 | 0.6 | 0.7 |
| 0.8 | 0.0 | 0.2 | 0.4 | 0.5 | 0.7 | 0.9 |
| 1.0 | 0.0 | 0.2 | 0.4 | 0.6 | 0.8 | 1.0 |

Der EI ist eine normierte Größe mit Werten zwischen 0 und 1, wobei 0 bedeutet, dass der HO **160** *nicht engagiert* ist und 1 bedeutet, dass der HO **160** *voll engagiert* ist. Die zweite Spalte in Tab.2 (*MAI_{gegl}* = *0.0*) behandelt den Fall dass der HO **160** das Geschehen mit weniger oder mehr Aufmerksamkeit verfolgt, jedoch nicht in das Geschehen eingreift. Die MK **140** übermittelt den EI zyklisch über die Datenleitung **141** an die AST **100.**

Die AST **100** bekommt in jedem Zyklus einen Satz von Stellwerten für die Aktuatoren und den KI des gegenwärtigen Szenarios von der SFK **130,** einen weiteren Satz von Stellwerten für die Aktuatoren von der MMI **150**, sowie den aktuellen EI des HO **160** von der MK **140.**

Zuerst muss die AST entscheiden, wer im gegenwärtigen Zyklus die Kontrolle über die Aktuatoren ausübt, die SFK **130** oder der HO **160** (über die MMI **150**). Wenn EI > KI, dann bekommt der HO **160** die Kontrolle und die AST übernimmt die Stellwerte von der **MMI 150.** Wenn EI >EI_{grenz} und der HO **160** hat die Kontrolle im vergangenen Zyklus ausgeübt, dann behält der HO **160** auch die Kontrolle im gegenwärtigen Zyklus. EIg_{renz} ist ein Parameter, der eingeführt wird, um eine Oszillation der Kontrolle zwischen dem HO **160** und der SFK **130** zu verhindern, wenn eine Episode mit einem hohen Engagement des HO **160** abläuft. Wenn EI ≤ EI_{grenz} und KI ≥ EI, dann bekommt die SFK **130** die Kontrolle. In der Folge übergibt die AST **100** die ausgewählten Stellwerte an die Aktuatoren **102.**

Ein beispielhafter Wert für EI_{grenz} ist 0,7.

Durch eine klare Allokation der Kontrolle kann in einem SoS das Auftreten von *zufälligen negativen emergenten* Eigenschaften verhindert und die Sicherheit des Systems erhöht werden. Die vorliegende Erfindung ist daher von großer wirtschaftlicher und gesellschaftlicher Bedeutung.

Das beschriebene Verfahren zur Allokation der Kontrolle in einem SoS kann nicht nur auf autonome Fahrzeuge, sondern auch auf eine Vielzahl von anderen autonomen Vorrichtungen, z.B. der Steuerung von Robotern, angewandt werden.

### Zitierte Literatur:

[1] US Patent 7,124,027. *Vehicular Collision Avoidance System.* Granted Oct. 17, 2006
[2] US Patent 7,647,178. Ekmark, et al. *Method and system for forward collision avoidance in an automotive vehicle,* granted Jan 12, 2010
[3] US Patent 7,039,551. Shu et al., *Method and Apparatus for Calculating an Operator Distraction Level.* Granted May 2,2006.
[4] US Patent Application 200432334. Kind,C. *Doze-off early Warning System for Automotive and other Applications.* US Patent Application 200432334. Feb. 19, 2004.
[5] Wikipedia, Autonomus Cars. URL: http://en.wikipedia.org/wiki/Autonomous car
[6] Kopetz, H. Real-Time Systems, Design Principles for Distributed Embedded Applications. Springer Verlag. 2011.
[7] Fisher, D., An Emergent Perspective on Interoperation of Systems of Systems. TECHNICAL REPORT CMU/SEI-2006-TR-003 ESC-TR-2006-003
[8] Strayer, D.L. et al. Profiles in Driver Distraction: Effects of Cell Phone Conversations on Younger and Older Drivers. Human Factors. Vol. 46. No. 4, pp. 640-649. 2004
[9] Autokiste., Brake distance calculator, accessed on Jan 13, 2013 at URL: http://www.autokiste.de/service/anhalteweg/index.htm

## Patentansprüche

1. Verfahren zur Allokation der Kontrolle in einem System-of-Systems, insbesondere einem dynamischen System-of-Systems, welches aus einem physikalischen System PS, einem autonomen Steuerungssystem CS, einem Human Operator HO (160), einer Monitorkomponente MK (140) und einer Aktuatorsteuerung AST (100) besteht oder ein physikalisches System PS, ein autonomes Steuerungssystem CS, einen Human Operator HO (160), eine Monitorkomponente MK (140) und eine Aktuatorsteuerung AST (100) umfasst, wobei das CS mit einem ihm zugeordneten Sensorsystem (110, 120) eine Umgebung, z.B. eine Umgebung des physikalischen Systems, und/oder das physikalische System zyklisch beobachtet und auf Basis dieser Beobachtung ein internes Modell der Umgebung und/oder des PS erstellt und eine Analyse des Modells vornimmt, um Stellwerte für die AST (100) und einen *Kritikalitätsindex KI* des Szenarios in einem Zyklus, insbesondere im gegenwärtigen Zyklus zu bestimmen, und wobei die MK (140) den HO (160) und/oder seine Handlungen, insbesondere seine gegenwärtigen Handlungen zyklisch beobachtet, um auf der Basis dieser Beobachtungen einen *Engagement-Index EI* des HO (160) in einem Zyklus, insbesondere im gegenwärtigen Zyklus zu bestimmen, wobei EI und KI normierte Werte zwischen 0 und 1 annehmen können, wobei KI = 0 die geringste Kritikalität und KI = 1 die höchste Kritikalität darstellt, und wobei EI = 0 bedeutet, dass der HO (160) nicht engagiert ist, und EI = 1 bedeutet, dass der HO (160) voll engagiert ist, und wobei die Kontrolle über das PS an den HO (160) zugewiesen wird, wenn EI > KI.

2. Verfahren nach Anspruch 1, **dadurch gekennzeichnet, dass** der HO (160) die Kontrolle an das CS abgibt, wenn EI ≤ EI_{grenz} und KI ≥ EI.

3. Verfahren nach Anspruch 1 oder 2, **dadurch gekennzeichnet, dass** der *Wert des Kritikalitätsindex KI* abgeleitet wird vom Zeitintervall zwischen *jetzt* und dem *LIA* (*last instant of action*)*.*

4. Verfahren nach einem der Ansprüche 1 bis 3, **dadurch gekennzeichnet, dass** der *Engagement-Index EI* des HO (160) abgeleitet wird von einem optischen *Aufmerksamkeitsindex OAI* des HO (160) und einem *motorischen Aufmerksamkeitsindex MAI* des HO (160).

5. Verfahren nach Anspruch 4, **dadurch gekennzeichnet, dass** der optische *Aufmerksamkeitsindex OAI* des HO (160) von der Beobachtung einer Visierlinie des HO (160) bestimmt wird.

6. Verfahren nach Anspruch 4 oder 5, **dadurch gekennzeichnet, dass** der *motorische Aufmerksamkeitsindex MAI* des HO (160) von der Beobachtung der vom HO (160) ausgegebenen Stellwerte bestimmt wird.

7. Verfahren nach einem der Ansprüche 4 bis 6, **dadurch gekennzeichnet, dass** der optische *Aufmerksamkeitsindex OAI* des HO (160) und der *motorische Aufmerksamkeitsindex MAI* des HO (160) über die Zeit *exponentiell geglättet* werden.

8. System-of-Systems, insbesondere dynamisches System-of-Systems bestehend aus einem physikalischen System PS, einem autonomen Steuerungssystem CS, einem Human Operator HO (160), einer Monitorkomponente MK (140) und einer Aktuatorsteuerung AST (100) bzw. umfassend ein physikalisches System PS, ein autonomes Steuerungssystem CS, eine Human Operator HO (160), eine Monitorkomponente MK (140) und eine Aktuatorsteuerung AST (100), wobei zur Allokation der Kontrolle das CS mit einem ihm zugeordneten Sensorsystem (110, 120) zyklisch beobachtet und auf Basis dieser Beobachtung ein internes Modell der Umgebung und/oder des PS erstellt und eine Analyse des Modells vornimmt, um Stellwerte für die AST (100) und einen *Kritikalitätsindex KI* des Szenarios in einem Zyklus, insbesondere im gegenwärtigen Zyklus zu bestimmen, und wobei die MK den HO (160) und/oder seine Handlungen, insbesondere seine gegenwärtigen Handlungen zyklisch beobachtet, um auf Basis dieser Beobachtungen einen *Engagement-Index EI* des HO (160) in einem Zyklus, insbesondere im gegenwärtigen Zyklus zu bestimmen, wobei EI und KI normierte Werte zwischen 0 und 1 annehmen können, wobei KI = 0 die geringste Kritikalität und KI = 1 die höchste Kritikalität darstellt, und wobei EI = 0 bedeutet, dass der HO (160) nicht engagiert ist, und EI = 1 bedeutet, dass der HO (160) voll engagiert ist, und wobei die Kontrolle über das PS an den HO (160) allokiert, wenn EI > KI.

9. System-of-Systems nach Anspruch 8, **dadurch gekennzeichnet, dass** der HO (160) die Kontrolle an das CS abgibt, wenn EI ≤ EI_{grenz} und KI ≥ EI.

10. Fahrzeug, insbesondere Kraftfahrzeug, mit zumindest einem System-of-Systems nach Anspruch 8 oder 9.

## Claims

1. A process for allocating control in a system of systems, in particular a dynamic system of systems, which consists of a physical system PS, an autonomous control system CS, a human operator HO (160), a monitor component MK (140), and an actuator control AST (100), or which comprises a physical system PS, an autonomous control system CS, a human operator HO (160), a monitor component MK (140), and an actuator control AST (100),
wherein
the CS cyclically observes, using a sensor system (110, 120) associated with it, an environment, e.g., an environment of the physical system and/or the physical system itself, and creates, on the basis of this observation, an internal model of the environment and/or the PS and performs an analysis of the model to determine control output for the AST (100) and a *criticality index KI* of the scenario in a cycle, in particular in the current cycle, and wherein the MK (140) cyclically observes the HO (160) and/or his actions, in particular his current actions, to determine, on the basis of these observations, an *engagement index EI* of the HO (160) in a cycle, in particular in the current cycle, EI and KI being able to assume standardized values between 0 and 1, KI = 0 representing the lowest criticality and KI = 1 representing the highest criticality, and EI = 0 meaning that the HO (160) is not engaged, and EI = 1 meaning that the HO (160) is fully engaged, and the control over the PS being assigned to the HO (160) when EI > KI.

2. A process according to claim 1, **characterized in that** the HO (160) turns over control to the CS when EI ≤ EIₗᵢₘᵢₜ and KI ≥ EI.

3. A process according to claim 1 or 2, **characterized in that** the *value of the criticality index KI* is derived from the time interval between *now* and the *LIA* (*last instant of action*).

4. A process according to any one claims 1 through 3, **characterized in that** the *engagement index EI* of the HO (160) is derived from a *visual attention index OAI* of the HO (160) and a *motor attention index MAI* of the HO (160).

5. A process according to claim 4, **that characterized in that** the *visual attention index OAI* of the HO (160) is determined by observation of a line of vision of the HO (160).

6. A process according to claim 4 or 5, **characterized in that** the *motor attention index MAI* of the HO (160) is determined by observation of the control outputs that are output by the HO (160).

7. A process according to any one of the claims 4 through 6, **characterized in that** the *visual attention index OAI* of the HO (160) and the *motor attention index MAI* of the HO (160) are *exponentially smoothed* over time.

8. A system of systems, in particular a dynamic system of systems consisting of a physical system PS, an autonomous control system CS, a human operator HO (160), a monitor component MK (140), and an actuator control AST (100), or comprising a physical system PS, an autonomous control system CS, a human operator HO (160), a monitor component MK (140), and an actuator control AST (100),
wherein
to allocate control, the CS cyclically observes, using a sensor system (110, 120) associated with it, and creates, on the basis of this observation, an internal model of the environment and/or the PS and performs an analysis of the model to determine control outputs for the AST (100) and a *criticality index KI* of the scenario in a cycle, in particular in the current cycle, and wherein the MK (160) cyclically observes the HO (160) and/or his actions, in particular his current actions, to determine, on the basis of these observations, an *engagement index EI* of the HO (160) in a cycle, in particular in the current cycle, EI and KI being able to assume standardized values between 0 and 1, KI = 0 representing the lowest criticality and KI = 1 representing the highest criticality, and EI = 0 meaning that the HO (160) is not engaged, and EI = 0 meaning that the HO (160) is fully engaged, and the control over the PS being allocated to the HO (160) when EI > KI.

9. A system of systems according to claim 8, **characterized in that** the HO (160) turns over control to the CS when EI ≤EIₗᵢₘᵢₜ and KI ≥EI.

10. A vehicle, in particular a motor vehicle, with at least one system of systems according to claim 8 or 9.

## Revendications

1. - Procédé d'allocation de contrôle dans un système-de-systèmes, en particulier un système-de-systèmes dynamique, lequel consiste en un système physique PS, un système de commande autonome CS, un opérateur humain HO (160), un composant de surveillance MK (140) et un contrôleur d'actionneur AST (100), ou comporte un système physique PS, un système de commande autonome CS, un opérateur humain HO (160), un composant de surveillance MK (140) et un contrôleur d'actionneur AST (100),
dans lequel
le CS surveille de façon cyclique un environnement, par exemple un environnement du système physique, et/ou le système physique avec un système de capteur (110, 120) qui lui est associé et, sur la base de cette surveillance, établit un modèle interne de l'environnement et/ou du PS et effectue une analyse du modèle, pour déterminer des valeurs de consigne pour l'AST (100) et un *indice de criticité KI* du scénario dans un cycle, en particulier dans le cycle en cours, et dans lequel le MK (140) surveille de façon cyclique le HO (160) et/ou ses actions, en particulier ses actions en cours, pour déterminer, sur la base de ces surveillances, un *indice d'engagement EI* du HO (160) dans un cycle, en particulier dans le cycle en cours, l'EI et le KI pouvant adopter des valeurs normalisées entre 0 et 1, KI = 0 représentant la criticité la plus faible, et KI = 1, la criticité la plus élevée, et EI = 0 signifiant que le HO (160) n'est pas engagé, et EI = 1 signifiant que le HO (160) est totalement engagé, et le contrôle sur le PS étant alloué au HO (160), lorsque EI > KI.

2. - Procédé selon la revendication 1, **caractérisé par le fait que** le HO (160) donne le contrôle au CS, lorsque EI ≤ EIₗᵢₘᵢₜₑ et KI ≥ EI.

3. - Procédé selon l'une des revendications 1 ou 2, **caractérisé par le fait que** la *valeur de l'indice de criticité KI* est déduite de l'intervalle de temps entre *maintenant* et le *LIA* (*dernier instant d'action (last instant of action)*)*.*

4. - Procédé selon l'une des revendications 1 à 3, **caractérisé par le fait que** *l'indice d'engagement EI* du HO (160) est déduit d'un *indice d'attention* optique *OAI* du HO (160) et d'un *indice d'attention moteur MAI* du HO (160).

5. - Procédé selon la revendication 4, **caractérisé par le fait que** *l'indice d'attention* optique *OAI* du HO (160) est déterminé par la surveillance d'une ligne de visée du HO (160).

6. - Procédé selon l'une des revendications 4 ou 5, **caractérisé par le fait que** *l'indice d'attention moteur MAI* du HO (160) est déterminé par la surveillance des valeurs de consigne émises par le HO (160).

7. - Procédé selon l'une des revendications 4 à 6, **caractérisé par le fait que** *l'indice d'attention* optique *OAI* du HO (160) et *l'indice d'attention moteur MAI* du HO (160) sont *lissés exponentiellement* au cours du temps.

8. - Système-de-systèmes, en particulier système-de-systèmes dynamique consistant en un système physique PS, un système de commande autonome CS, un opérateur humain HO (160), un composant de surveillance MK (140) et un contrôleur d'actionneur AST (100) ou comportant un système physique PS, un système de commande autonome CS, un opérateur humain HO (160), un composant de surveillance MK (140) et un contrôleur d'actionneur AST (100),
dans lequel
pour l'allocation de contrôle, le CS surveille de façon cyclique avec un système de capteur (110, 120) qui lui est associé et, sur la base de cette surveillance, établit un modèle interne de l'environnement et/ou du PS et effectue une analyse du modèle, pour déterminer des valeurs de consigne pour l'AST (100) et un *indice de criticité KI* du scénario dans un cycle, en particulier dans le cycle en cours, et dans lequel le MK surveille de façon cyclique le HO (160) et/ou ses actions, en particulier ses actions en cours pour déterminer sur la base de ces surveillances un *indice d'engagement EI* du HO (160) dans un cycle, en particulier dans le cycle en cours, l'EI et le KI pouvant adopter des valeurs normalisées entre 0 et 1, KI = 0 représentant la criticité la plus faible, et KI = 1, la criticité la plus élevée, et EI = 0 signifiant que le HO (160) n'est pas engagé, et EI = 1 signifiant que le HO (160) est totalement engagé, et le contrôle sur le PS étant alloué au HO (160), lorsque EI > KI.

9. - Système-de-systèmes selon la revendication 8, **caractérisé par le fait que** le HO (160) donne le contrôle au CS, lorsque EI ≤ EIₗᵢₘᵢₜₑ et KI ≥ EI.

10. - Véhicule, en particulier véhicule automobile comportant au moins un système-de-systèmes selon l'une des revendications 8 ou 9.
